# EUROPEAN PATENT SPECIFICATION

(11) **EP 3 157 221 B1**
(45) Date of publication and mention of the grant of the patent: **06.05.2020**
(21) Application number: 14884487.1
(22) Date of filing: 01.08.2014
(51) Int. Cl.: H04L 29/06, H04L 12/58

(54) **COMMUNICATION SERVICE PROCESSING METHOD AND DEVICE IN CIRCUIT SWITCH DOMAIN, AND STORAGE MEDIUM**
KOMMUNIKATIONSDIENSTVERARBEITUNGSVERFAHREN UND -VORRICHTUNG IN LEITUNGSVERMITTLUNGSDOMÄNE UND SPEICHERMEDIUM
PROCÉDÉ ET DISPOSITIF DE TRAITEMENT DE SERVICE DE COMMUNICATION DANS UN DOMAINE À COMMUTATION DE CIRCUITS, ET SUPPORT D'INFORMATIONS

(30) Priority: 10.06.2014 CN 201410256526
(43) Date of publication of application: 19.04.2017
(73) Proprietor: ZTE Corporation, Shenzhen, Guangdong 518057 (CN)
(72) Inventor: YE, Xinning, Shenzhen Guangdong 518057 (CN)
(74) Representative: Aipex B.V.
(86) International application number: PCT/CN2014/083550
(87) International publication number: WO 2015/131479

(56) References cited:
- EP-A1- 2 107 741
- CN-A- 101 771 959
- CN-A- 102 137 065
- CN-A- 103 338 209
- CN-A- 103 607 781
- US-A1- 2004 019 695
- US-A1- 2005 287 993
- US-A1- 2007 286 370

## Description

### Technical Field

The present disclosure relates to the field of communications, and in particular, to a method, a device and a storage medium for processing a communication service in a circuit switch domain.

### Technical Background

With the popularization and widespread use of real-time communication tools and wireless networks on an intelligent mobile phone, more and more people may communicate with each other by means of real-time communication tools such as WeChat and QQ, which have become indispensable communication tools in people's daily life. However, at present, people mainly use such tools on word and picture communication, and even though a voice service is used, it is mainly for talking back and leaving words. In fact, at present, many real-time communication tools have the function of voice call. It is need a system that can automatically switch a voice call or a short message service in the circuit switch (CS) domain onto the corresponding real-time tool, so that not only different experiences can be brought to users, but also fees may be saved for users. EP 2107741A1 discloses that in a service level interworking unit, a service center address or a set of SC addresses dedicated for the service level interworking is used whenever an instant message is interworked to a short message. In other words, if a message is initially sent as an instant message by user equipment and is interworked to a short message by the interworking function, the interworked short message is sent to a dedicated service center address. For originating messages that are not interworked, different service center address or addresses are used. A terminating short message received at the interworking unit is interworked to an instant message and the interworked instant message is delivered to the user equipment, if a service center address in the terminating short message is one of the dedicated service center addresses. If the a service center address in the terminating short message is not one of the dedicated service center addresses, the terminating short message is delivered to the user equipment without a service level interworking. US 2005/0287993 A1 discloses an apparatus, system, and method provide voicemail service using a packet data messaging service such as multimedia message service. Upon detecting that the call has been diverted to the voicemail server, rather than using a real-time voice connection to record a voicemail message, the voicemail message is recorded at an origination mobile station and transmitted in a packet data message through a packet data messaging service center such as a multimedia messaging service center. If the destination device is a destination mobile station subscribing to the packet data messaging service, the packet data message is deposited in the destination mobile station. Where the destination device is a device without access to the service, the packet data message is forwarded to a destination address in a voice mail server associated with the voicemail box of the destination device. US 2004/0019695 A1 discloses a system, method, and computer program product enable instant messaging systems to use alternative message delivery mechanisms. Recipients may register one or more alternative message delivery mechanisms, such as cell phones, pagers, etc., through which they are available as an alternative to an instant messaging system. Constraints may be added to these registered alternatives, such as specifying a limitation on days of the week and/or hours of the day when a particular alternative may be used. Providing that an alternative messaging mechanism is registered, and any constraints for this alternative are satisfied, the present extended instant messaging system selects the most suitable alternative forwarding mechanisms, and delivers the messages to the intended recipients. US 2007/0286370 A1 discloses systems, apparatuses and methods for providing the identity of communication device users who initiate communications from data networks such as the Internet and that are targeted for users in circuit-switched domains. A calling party identifier is received from a calling terminal initiating a voice call. A circuit-switched domain identifier is associated with the calling party identifier. The association of CS domain identifier and calling party identifier is provided to a targeted terminal, which may store the associated information. The voice call and the CS domain identifier associated with the calling party identifier are thereafter directed from the calling terminal to the targeted terminal. The targeted terminal may then identify the calling party using the CS domain identifier to identify the associated calling party identifier.

### Summary

In view of above, the embodiments of the invention provide a method, a device and a storage medium for processing a communication service in a circuit switch domain according to independent claims 1, 6 and 11, respectively, which can switch a voice call service or a short message service in a circuit switch domain onto a real-time communication tool. Further improvements and embodiments are provided in the dependent claims.

The technical solutions of the embodiments of the invention are realized as follows:
In a first aspect, one embodiment of the invention provides a method for processing a communication service in a circuit switch domain, which includes:
judging whether a switching condition is met, when a communication service being currently processed by a communication terminal is a voice call service or a short message service in a circuit switch domain, wherein the switching condition is a condition for switching the voice call service or the short message service onto a real-time communication tool in a packet switch domain; and
switching the communication service onto the real-time communication tool in the packet switch domain of the communication terminal when the switching condition is met,.

In one embodiment of the invention, when the communication service is a voice call service in the circuit switch domain, the switching condition is met if:
the opposite terminal is in the address book of the real-time communication tool that has a voice call function and/or a video call function on the communication terminal;
or,
the opposite terminal is in the address book of the real-time communication tool that has a voice call function and/or a video call function on the communication terminal, and the communication terminal is in a networked state currently.

In one embodiment of the invention, when the communication terminal is a calling terminal, it is judged whether the switching condition is met after the communication terminal determines the called terminal and before the communication terminal dials, during dialing or during conversation with the opposite terminal;
when the communication terminal is a called terminal, it is judged whether the switching condition is met before the communication terminal answers the voice call service in the circuit switch domain or during answering of the voice call service.

In one embodiment of the invention, the switching the voice call service in the circuit switch domain onto the real-time communication tool in the packet switch domain includes:
initiating the voice call service and/or the video call service in real-time communication to the opposite terminal by the real-time communication tool that has the voice call function and/or the video call function on the communication terminal.

In one embodiment of the invention, when the communication service is a short message service in the circuit switch domain, the switching condition is met if:
the opposite terminal is in an address book of the real-time communication tool that has a word communication function on the communication terminal;
or,
the opposite terminal is in an address book of the real-time communication tool that has a word communication function on the communication terminal, and the communication terminal is in a networked state currently;
or,
the communication terminal is in a networked state currently, the opposite terminal is in an address book of a real-time communication tool that has a word communication function on the communication terminal and the opposite terminal is in an on-line state currently.

In one embodiment of the invention, when the communication terminal is a short message sending party, it is judged whether the switching condition is met after the communication terminal determines the short message receiving party and before a short message is sent, or after the communication terminal sends a short message;
when the communication terminal is a short message receiving party, it is judged whether the switching condition is met before the communication terminal opens the received short message, or after the communication terminal opens the received short message and before the communication terminal sends a reply short message to the opposite terminal.

In one embodiment of the invention, the switching the short message service in the circuit switch domain onto the real-time communication tool in the packet switch domain includes:
initiating the word message communication service in real-time communication to the opposite terminal by the real-time communication tool that has the word communication function on the communication terminal;
or,
initiating the word message communication service in real-time communication to the opposite terminal by the real-time communication tool that has the word communication function on the communication terminal, and copying the short message content to the message content of the real-time communication tool when the communication terminal has edited at least a part of the short message content.

In a second aspect, one embodiment of the invention further provides a device for processing a communication service in a circuit switch domain, which includes a switching control module and a switching execution module, wherein:
the switching control module is configured for judging whether a switching condition is met, when a communication service being currently processed by a communication terminal is a voice call service or a short message service in a circuit switch domain, wherein the switching condition is a condition for switching the voice call service or the short message service onto a real-time communication tool in a packet switch domain; if it is met, notifying the switching execution module; and
the switching execution module is configured for switching, after receiving the notification, the communication service onto the real-time communication tool of the communication terminal in the packet switch domain.

In one embodiment of the invention, when the communication service is a voice call service in the circuit switch domain, the switching condition is met if:
the opposite terminal is in the address book of the real-time communication tool that has a voice call function and/or a video call function on the communication terminal;
or,
the opposite terminal is in the address book of the real-time communication tool that has a voice call function and/or a video call function on the communication terminal, and the communication terminal is in a networked state currently.

In one embodiment of the invention, the switching control module includes: a voice call switching control submodule, configured for judging, when the communication terminal is a calling terminal, whether the switching condition is met after the communication terminal determines the called terminal and before the communication terminal dials, during dialing or during conversation with the opposite terminal; and judging, when the communication terminal is a called terminal, whether the switching condition is met before the communication terminal answers the voice call service in the circuit switch domain or during answering of the voice call service.

In one embodiment of the invention, the switching execution module includes: a voice call switching submodule, configured for initiating the voice call service and/or the video call service in real-time communication to the opposite terminal by the real-time communication tool that has the voice call function and/or the video call function on the communication terminal.

In one embodiment of the invention, when the communication service is a short message service in the circuit switch domain, the switching condition is met if:
the opposite terminal is in an address book of the real-time communication tool that has a word communication function on the communication terminal;
or,
the opposite terminal is in an address book of the real-time communication tool that has a word communication function on the communication terminal, and the communication terminal is in a networked state currently;
or,
the communication terminal is in a networked state currently, the opposite terminal is in an address book of the real-time communication tool that has a word communication function on the communication terminal and the opposite terminal is in an on-line state currently.

In one embodiment of the invention, the switching control module includes: a short message switching control submodule, configured for judging, when the communication terminal is a short message sending party, whether the switching condition is met after the communication terminal determines the short message receiving party and before a short message is sent, or after the communication terminal sends a short message; and judging, when the communication terminal is a short message receiving party, whether the switching condition is met before the communication terminal opens the received short message, or after the communication terminal opens the received short message and before the communication terminal sends a reply short message to the opposite terminal.

In one embodiment of the invention, the switching execution module includes: a short message switching execution submodule, configured for initiating the word message communication service in real-time communication to the opposite terminal by the real-time communication tool that has the word communication function on the communication terminal;
or,
initiating the word real-time communication service in real-time communication to the opposite terminal by a real-time communication tool that has the word communication function on the communication terminal, and copying the short message content to the message content of the real-time communication tool when the communication terminal has edited at least a part of the short message content.

In a third aspect, one embodiment of the invention further provides a computer storage medium, on which a computer-executable instruction is stored, wherein the computer-executable instruction is configured for implementing the above method for processing a communication service in a circuit switch domain.

The embodiments of the invention have the following beneficial effects:
In the method, device and storage medium for processing a communication service in a circuit switch domain according to the embodiments of the invention, when a communication service being currently processed by a communication terminal is a voice call service or a short message service in a circuit switch domain, it is judged whether a switching condition for switching the communication service onto a real-time communication tool in a packet switch domain of the communication terminal is met; if it is met, the communication service is switched onto the real-time communication tool in the packet switch domain of the communication terminal, so that a user may realize voice call function or word communication via the real-time communication tool (for example, QQ and WeChat, etc.) on the communication terminal, thereby bring a novel communication experience to the user, and also saving communication fee in the circuit switch domain for the user.

### Description of Drawings

Fig.1 is structural representation 1 of a device for processing a communication service in a circuit switch domain according to Embodiment 2 of the invention;
Fig. 2 is structural representation 2 of a device for processing a communication service in a circuit switch domain according to Embodiment 2 of the invention;
Fig. 3 is a schematic flow chart showing the setting of a switching condition according to Embodiment 3 of the invention;
Fig. 4 is a schematic flow chart showing the process of judging whether a voice call service in the CS domain meets a switching condition according to Embodiment 3 of the invention;
Fig. 5 is a schematic flow chart showing the switching process of the voice call service in the CS domain according to Embodiment 3 of the invention;
Fig. 6 is a schematic flow chart showing the process of judging whether a short message service in the CS domain meets a switching condition according to Embodiment 3 of the invention; and
Fig. 7 is a schematic flow chart showing the switching process of a short message service in the CS domain according to Embodiment 3 of the invention.

### Detailed description of the Preferred Embodiment

The technical solutions of the disclosure will be further illustrated in detail below by specific implementation modes in conjunction with the drawings.

### Embodiment 1

In this embodiment, the processing on a communication service in a circuit switch domain includes: when the communication service being currently processed by a communication terminal (for example, an intelligent mobile phone) is a voice call service or a short message service in the circuit switch domain, judging whether a switching condition for switching the communication service onto a real-time communication tool in a Packet Switch (PS) domain of the communication terminal is met; if the switching condition is met, then switching the communication service onto the real-time communication tool in the packet switch domain of the communication terminal; if the switching condition is not met, then processing the communication service according to a general process.

In this embodiment, the real-time communication tool in the packet switch domain may include at least one of QQ, WeChat, Baidu Hi, Skype, Gtalk, ICQ and MSN, etc., so long as the real-time communication tool can realize voice call and/or video call and/or word message (including word and picture information) communication.

In this embodiment, when the voice call service in the CS domain is switched onto real-time communication tools on the communication terminal, it will be switched onto a real-time communication tool that has a voice call function and/or a video call function, so that a voice call may be realized by using the voice call function and/or the video call function of such a real-time communication tool such as WeChat and QQ, etc. When the short message service in the CS domain is switched onto real-time communication tools on the communication terminal, it will be switched onto a real-time communication tool that has a word communication function, so that the short message communication may be replaced by the word communication function of such a real-time communication tools such as WeChat, QQ and MSN, etc.

In this embodiment, a user may set in advance on the communication terminal whether to enable the function of switching a voice call service or a short message service in the CS domain onto a real-time communication tool; specifically, a corresponding system switch option may be provided in the communication terminal system, and the user may turn on and off the function via the system switch option. Before the above judging whether the switching condition is met, it may be judged in advance whether the user enables the above switch function, and the step of judging whether the switching condition is met is performed only upon the function is enabled; otherwise, the judging step will not be performed, and hence the communication terminal processes the voice call service and the short message service in the CS domain normally.

In this embodiment, considering the factors of different communication services and different application scenes, etc., the switching condition may be set flexibly. The exemplary illustrations will be given below for switching conditions of the voice call service and the short message service in the CS domain respectively. Before that, the term "opposite terminal" in this embodiment will be explained first: when the communication service being currently processed by a communication terminal is a voice call service in the CS domain, the opposite terminal refers to the other terminal that performs the voice call service with the communication terminal, for example, when the communication terminal is a calling terminal, the opposite terminal here is a called terminal; on the contrary, when the communication terminal is a called terminal, the opposite terminal will be a calling terminal; when the communication service being currently processed by a communication terminal is a short message service in the CS domain, the opposite terminal refers to the other terminal that performs the short message service with the communication terminal, for example, when the communication terminal is a short message sending party, the opposite terminal here is a short message receiving party, and on the contrary, when the communication terminal is a short message receiving party, the opposite terminal will be a short message sending party.

When the communication service to be switched currently is the voice call service in the CS domain, the switching condition is that:
the opposite terminal is in the address book of a real-time communication tool (for example, a QQ address book or a WeChat address book) that has a voice call function and/or a video call function on the communication terminal, (specifically, it may be determined whether the opposite terminal is in the address book according to a correspondence between the contact number (for example, telephone number) of the opposite terminal and the contact account in the real-time communication tool; it is noted that for some real-time communication tools, the contact account registered by the user may be the contact number of the opposite terminal (for example, the user registers with the telephone number directly));
or,
the opposite terminal is in the address book of a real-time communication tool that has a voice call function and/or a video call function on the communication terminal, and the communication terminal is in a networked state currently.

The main difference between the above two switching conditions lies in whether the communication terminal is required to be in a networked state currently. For the above first switching condition, a switching operation will be initiated when the switching condition is met in the case that the opposite terminal is in the address book of the corresponding real-time communication tool, and then during the subsequent switching operation, it may be found that the communication terminal is not networked currently, and at this point, the user may be prompted to perform a networking operation, or network connection of the communication terminal may be opened automatically. For the above second switching condition, based on the switching condition in the above first embodiment, it further needs to meet that the communication terminal is in the networked state currently, if the communication terminal is not in the networked state currently, it may indicate that the user currently does not want to implement the voice call or short message service of the CS domain via the real-time communication tool, and in this case the switching operation is not performed.

Additionally, further in this embodiment, the user may set in advance which real-time communication tools are employed specifically during switching. For example, the user may set that only QQ is employed, and at this point, it will only query in the QQ address book whether the opposite terminal is in the QQ address book; the user may also set that a plurality of real-time communication tools, for example QQ and WeChat, etc., are employed, and at this point, it may search in the address books of the plurality of real-time communication tools such as QQ and WeChat, etc.. In this embodiment, for the above second switching condition, specifically, the user may further set the network environment networked by the communication terminal currently. For example, for realizing a voice call or a video call, the network requirements on the network are strict, and the required traffic flow is large, and hence the user may set that voice call switch in the CS domain is performed only when the communication terminal is connected to a WLAN network, and no switch will be performed in cellular network. Alternatively, the network environment of the network may not be defined. The specific setting mode may be set according to the specific application scene and the individualized demand of the user.

When the current communication service is a short message service in the circuit switch domain, the switching condition is that:
the opposite terminal is in the address book of a real-time communication tool that has a word communication function (for example, at least one of the real-time communication tools such as QQ, WeChat and MSN, etc.) on the communication terminal (specifically, it may be determined whether the opposite terminal is in the address book according to a correspondence between the contact number (for example, telephone number) of the opposite terminal and the contact account in the real-time communication tool); however, for some real-time communication tools, the contact account registered by the user may be the contact number of the opposite terminal (for example, the user registers with the telephone number directly);
or,
the opposite terminal is in the address book of a real-time communication tool that has a word communication function on the communication terminal, and the communication terminal is in a networked state currently;
or,
the communication terminal is in a networked state currently, and the opposite terminal is in the address book of a real-time communication tool that has a word communication function on the communication terminal and is in an on-line state currently.

The main difference between the above first switching condition and second switching condition also lies in whether the communication terminal is required to be in a networked state currently, and it will not be described again here. For the above third switching condition, on the basis of the above second switching condition, it further requires that not only the opposite terminal is in the address book of the corresponding real-time communication tool, but also the opposite terminal is in an on-line state currently. Considering that if the opposite terminal is not in an on-line state currently, the message sent to the opposite terminal via the real-time communication tool may not be received and replied in time. Therefore, in order to solve this problem, it is also necessary to meet the additional condition that the opposite terminal is in an on-line state currently. Alternatively, it should be understood that, the above first and second switching conditions are also applicable, and at this point, after the communication terminal sends a message to the opposite terminal via a real-time communication tool, even if the opposite terminal may not be on-line currently, it may receive the message (i.e., off-line message) after it is on-line. It is known that even if the short message is sent via the CS domain, it also cannot be sure that the short message is received and replied in time by the opposite terminal, especially for many short messages which is no requirement on the timeliness of the receiving and replying thereof, and even no requirement on reply from the opposite terminal (for example, advertisement short messages).

It should be understood that, for the voice call service and the short message service in the CS domain, the switching conditions are not limited to the above several exemplary modes.

In this embodiment, when the communication service in the CS domain that needs to be switched currently is a voice call service, if the communication terminal is a calling terminal, it may be judged whether the above switching conditions are met after the communication terminal determines the called terminal (i.e., the number of the called party) and before dialing, during dialing (i.e., it has been dialed, but the call is not connected) or during conversation with the opposite terminal (i.e., the call has been connected); when the communication terminal is a called terminal, it may be judged whether the above switching conditions are met before the communication terminal answers a voice call service in the circuit switch domain, or during answering of the voice call service.

Correspondingly, in this embodiment, a switch option may also be added on the corresponding interface of the compunction terminal (for example, the dial interface, the dialing interface, the calling interface and the phone-answering interface, etc.), so that it may be convenient for the user to autonomously select to initiate the calling of a data service before dialing or during dialing or during conversation or before answering.

In this embodiment, when a voice call service in the CS domain is switched onto a real-time communication tool in the PS domain, it includes: initiating a voice call service and/or a video call service in real-time communication (for example, QQ voice chat or video chat) to the opposite terminal via a real-time communication tool that has a voice call function and/or a video call function (for example, QQ) on the communication terminal. In this embodiment, after the communication terminal initiates a voice call service and/or a video call service in real-time communication to the opposite terminal, if the opposite terminal confirms to receive the voice call service and/or video call service in real-time communication in a predefined time, the processing on the voice call service in the CS domain will be ended; otherwise, the current switch process may be ended directly, and the service may be processed according to the normal CS domain process; or, it may prompt the user that no reply is received from the opposite terminal, and the user may decide whether to still wait.

In this embodiment, when the CS domain service that needs to be switched currently is a short message service, if the communication terminal is a short message sending party, it may be judged whether the switching condition is met after the communication terminal determines the short message receiving party and before a short message is sent, or after the communication terminal sends the short message; if the communication terminal is a short message receiving party, it may be judged whether the switching condition is met before the communication terminal opens the received short message, or after the communication terminal opens the received short message and before the communication terminal sends a reply short message to the opposite terminal. Correspondingly, a corresponding function option may also be provided in the corresponding short message compiling interface, so that it may be convenient for the user to autonomously select to initiate the information sending of the data service during compiling the short message.

In this embodiment, the switching the short message service in the CS domain to the real-time communication tool in the PS domain includes:
initiating a word message communication service in real-time communication (for example, word chat of QQ) to the opposite terminal via a real-time communication tool that has a word communication function on the communication terminal (for example, QQ);
or,
initiating a word message communication service in real-time communication to the opposite terminal via a real-time communication tool that has a word communication function on the communication terminal, and copying the short message content into the message content of the real-time communication tool when the communication terminal has edited at least a part of the short message content (for example, the current user may possibly have edited the short message content or a part of the short message content on the communication terminal before sending the short message or the replied short message), thereby avoiding repeated compiling of the user.

### Embodiment 2:

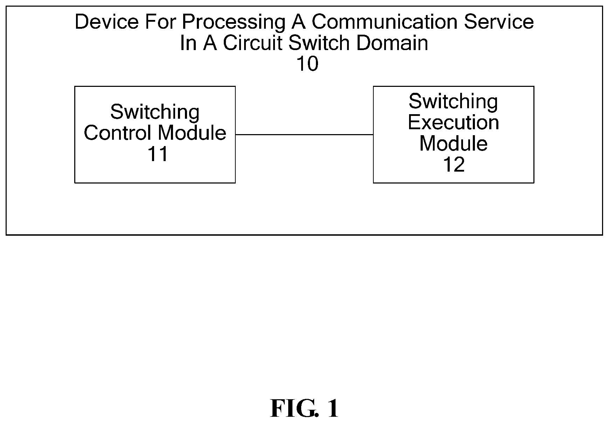

Referring to Fig. 1, the device for processing a communication service in a circuit switch domain according to this embodiment includes a switching control module 11 and a switching execution module 12, wherein:
the switching control module 11 is configured for judging, when a communication service being currently processed by a communication terminal is a voice call service or a short message service in a circuit switch domain, whether a switching condition for switching the communication service onto a real-time communication tool in a packet switch domain of the communication terminal is met; and if it is met, notifying the switching execution module 12; and
The switching execution module 12 is configured for switching, after receiving the notification, the communication service onto the real-time communication tool in the packet switch domain of the communication terminal.

In this embodiment, the real-time communication tool in the PS domain may include at least one of QQ, WeChat, Baidu Hi, Skype, Gtalk, ICQ and MSN, etc., so long as the real-time communication tool can realize voice call and/or video call and/or word message (including word and picture information) communication.

In this embodiment, when the voice call service in the CS domain is switched onto a real-time communication tools on the communication terminal, it will be switched onto a real-time communication tool that has a voice call function and/or a video call function, so that a voice call may be realized by using the voice call function and/or the video call function of such a real-time communication tools such as WeChat and QQ, etc. When the short message service in the CS domain is switched onto the real-time communication tools on the communication terminal, it will be switched onto a real-time communication tool that has a word communication function, so that the short message communication may be replaced by the word communication function of such a real-time communication tools such as WeChat, QQ and MSN, etc.

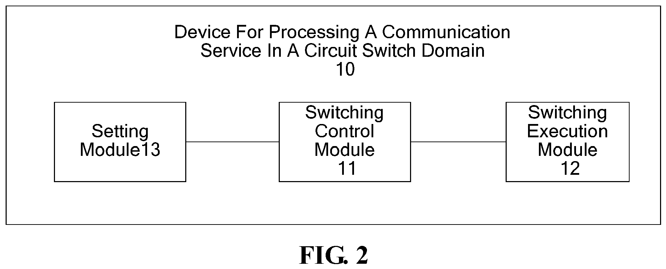

Referring to Fig. 2, the device for processing a communication service in a circuit switch domain in this embodiment may further include: a setting module 13, which is configured for setting in advance on the communication terminal whether to enable the function of switching a voice call service or a short message service in the CS domain onto a real-time communication tool; specifically, a corresponding system switch option may be provied in the communication terminal system, and the user may turn on and off the function via the system switch option. Before the switching control module 11 judges whether the switching condition is met, it may be judged in advance whether the user enables the above switch function, and the step of judging whether the switching condition is met is performed only upon the function is enabled; otherwise, the judging step will not be performed, and hence the communication terminal processes the voice call service and the short message service in the CS domain normally.

In this embodiment, considering of different communication services and different application scenes, etc., the switching condition may be set flexibly by the user via the setting module 13. The exemplary illustrations will be given below for switching conditions of the voice call service and the short message service in the CS domain respectively.

When the communication service to be switched currently is the voice call service in the CS domain, the switching condition is that:
the opposite terminal is in the address book of a real-time communication tool (for example, in a QQ address book or a WeChat address book) that has a voice call function and/or a video call function on the communication terminal, (specifically, it may be determined whether the opposite terminal is in the address book according to a correspondence between the contact number (for example, telephone number) of the opposite terminal and the contact account in the real-time communication tool; it is noted that, for some real-time communication tools, the contact account registered by the user may be the contact number of the opposite terminal (for example, the user registers with the telephone number directly));
or,
the opposite terminal is in the address book of a real-time communication tool that has a voice call function and/or a video call function on the communication terminal, and the communication terminal is in a networked state currently.

The main difference between the above two switching conditions lies in whether the communication terminal is required to be in a networked state currently. For the above first switching condition, a switching operation will be initiated when the switching condition is met in the case that the opposite terminal is in the address book of the corresponding real-time communication tool, and then during the subsequent switching operation, it may be found that the communication terminal is not networked currently, and at this point, the user may be prompted to perform a networking operation, or network connection of the communication terminal may be opened automatically. For the above second switching condition, based on the switching condition in the above first embodiment, it further needs to meet that the communication terminal is in a networked state currently, if the communication terminal is not in the networked state currently, it may indicate that the user currently does not want to implement the voice call or short message service of the CS domain via the real-time communication tool, and in this case the switching operation is not performed.

Additionally, further in this embodiment, the user may set in advance which real-time communication tools are employed specifically during switching. For example, the user may set that only QQ is employed, and at this point, it will only query in the QQ address book whether the opposite terminal is in the QQ address book; the user may also set that a plurality of real-time communication tools, for example, QQ and WeChat, etc., are employed, and at this point, it may search in the address books of the plurality of real-time communication tools such as QQ and WeChat, etc.. In this embodiment, for the above second switching condition, the user may further set the network environment networked by the communication terminal currently. For example, for realizing a voice call or a video call, the network requirements on the network are strict, and the required traffic flow is large, and hence the user may set that voice call switch in the CS domain is performed only when the communication terminal is connected to a WLAN network, and no switch will be performed in cellular network. Alternatively, the network environment of the network may not be defined. The specific setting mode may be set according to the specific application scene and the individualized demand of the user.

When the current communication service is a short message service in the circuit switch domain, the switching condition is that:
the opposite terminal is in the address book of a real-time communication tool that has a word communication function (for example, at least one of the real-time communication tools such as QQ, WeChat and MSN, etc.) on the communication terminal (and specifically, it may be determined whether the opposite terminal is in the address book according to a correspondence between the contact number (for example, telephone number) of the opposite terminal and the contact account in the real-time communication tool; however, for some real-time communication tools, the contact account registered by the user may be the contact number of the opposite terminal (for example, the user registers with the telephone number directly);
or,
the opposite terminal is in the address book of a real-time communication tool that has a word communication function on the communication terminal, and the communication terminal is in a networked state currently;
or,
the communication terminal is in a networked state currently, and the opposite terminal is in the address book of a real-time communication tool that has a word communication function on the communication terminal and is in an on-line state currently.

The main difference between the above first switching condition and second switching condition also lies in whether the communication terminal is required to be in a networked state currently, and it will not be described again here. For the above third switching condition, on the basis of the above second switching condition, it further requires that not only the opposite terminal is in the address book of the corresponding real-time communication tool, but also the opposite terminal is in an on-line state currently. Considering that if the opposite terminal is not in an on-line state currently, the message sent to the opposite terminal via the real-time communication tool may not be received and replied in time. Therefore, in order to solve this problem, it is also necessary to meet the additional condition that the opposite terminal is in an on-line state currently. Alternatively, tt should be understood that, the above first and second switching conditions are also applicable, and at this point, after the communication terminal sends a message to the opposite terminal via a real-time communication tool, even if the opposite terminal may not be on-line currently, it may receive the off-line message after it is on-line. It is known that even if the short message is sent via the CS domain, it also cannot be sure that the short message is received and replied in time by the opposite terminal, especially for many short messages which is no requirement on the timeliness of the receiving and replying thereof, and even no requirement on reply from the opposite terminal (for example, advertisement short messages).

It should be understood that, for the voice call service and the short message service in the CS domain, the switching conditions are not limited to the above several exemplary modes.

In this embodiment, the switching control module 11 includes a voice call switching control submodule, and the switching execution module 12 includes a voice call switching submodule, wherein, the voice call switching control submodule is configured for judging, when the communication terminal is a calling terminal, whether the above switching conditions are met after the communication terminal determines the called terminal (i.e., the called party number) and before dialing, during dialing (i.e., it has been dialed, but the call is not connected) or during conversation with the opposite terminal (i.e., the call has been connected); and judging, when the communication terminal is a called terminal, whether the above switching conditions are met before the communication terminal answers a voice call service in the circuit switch domain, or during answering of the voice call service. The voice call switching submodule initiates a voice call service and/or a video call service in real-time communication (for example, QQ voice chat or video chat) onto the opposite terminal via a real-time communication tool that has a voice call function and/or a video call function (for example, QQ) on the communication terminal. In this embodiment, after initiating a voice call service and/or a video call service in real-time communication to the opposite terminal by the communication terminal, if the opposite terminal confirms to receive the voice call service and/or video call service of real-time communication in a predefined time, the processing on the voice call service in the CS domain will be ended; otherwise, the current switch process may be ended directly, and the service may be processed according to the normal CS domain process; or, it may prompt the user that no reply is received from the opposite terminal, and the user may decide whether to still wait.

In this embodiment, the switching control module 11 further includes a short message switching control submodule, and the switching execution module 12 further includes a short message switching execution submodule. The short message switching control submodule is configured for judging, when the communication terminal is a short message sending party, whether the switching condition is met after the communication terminal determines the short message receiving party and before a short message is sent, or after the communication terminal sends the short message; and judging, when the communication terminal is a short message receiving party, whether the switching condition is met before the communication terminal opens the received short message, or after the communication terminal opens the received short message and before the communication terminal sends a reply short message to the opposite terminal. The short message switching execution submodule is configured for initiating a word message communication service in real-time communication (for example, word chat of QQ) to the opposite terminal via a real-time communication tool that has a word communication function on the communication terminal (for example, QQ);
or,
initiating a word message communication service in real-time communication to the opposite terminal via a real-time communication tool that has a word communication function on the communication terminal, and copying the short message content into the message content of the real-time communication tool when the communication terminal has edited at least a part of the short message content currently (for example, the current user may possibly have edited the short message content or a part of the short message content on the communication terminal before sending the short message or the replied short message), thereby avoiding repeated compiling by the user.

The device for processing a communication service in a circuit switch domain according to this embodiment may be completely realized via software, and also, it will not be excluded that the device is realized by combining software with hardware. This embodiment further provides a communication terminal, which has the ability of processing a voice call and/or short message service in the CS domain, for example, various intelligent mobile phones and tablet computers, etc. The communication terminal includes a memory and a processor, wherein the memory is configured for storing a program module for realizing the above device for processing a communication service in a circuit switch domain, and the processor is configured for invoking such a program module to realize the above switching process of the voice call service and the short message service in the CS domain.

### Embodiment 3 :

For better understanding the disclosure, the solutions of the disclosure will be further illustrated below in conjunction with specific application scenes.

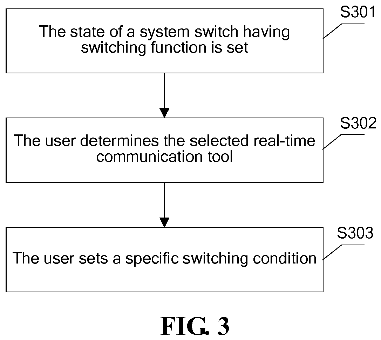

Referring to Fig. 3, a user may perform the setting on the communication terminal as below:
Step 301: The state of a system switch having switching function is set;
   When the system switch is set as on, it indicates that the user enables a real-time tool for switching a voice call service or a short message service in the CS domain onto the PS domain; otherwise, it is disabled.
Step 302: The user determines the selected real-time tool;
Step 303: The user sets a specific switching condition.

The above step 402 and step 403 are in fact both a process in which the user set a switching condition. The specific setting mode thereof has been illustrated in each of the above embodiments, and it will not be described again here.

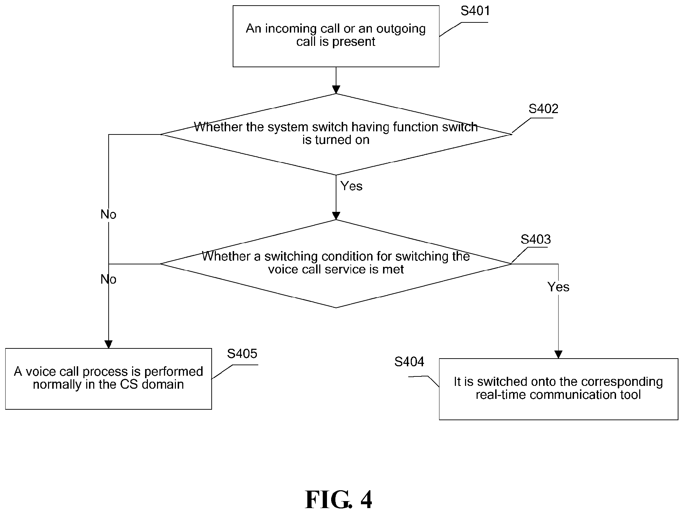

Referring to Fig. 4, it shows a situation in which the communication terminal has an incoming call or an outgoing call currently, i.e., a situation in which the communication terminal is currently processing a voice call service in the CS domain, and the process thereof includes:
Step 401: An incoming call or an outgoing call is present;
Step 402: It is judged whether the system switch having switching function is turned on; if yes, it turns to Step 403, otherwise, it turns to Step 405;
Step 403: It is judged whether a switching condition for switching the voice call service is met; if yes, it turns to Step 404, otherwise, it turns to Step 405;
Step 404: It is switched onto the corresponding real-time communication tool.
Step 405: A voice call process is performed normally in the CS domain.

Specifically, for an outgoing call of the communication terminal, because the time the opposite terminal connects the call is not limited, it may start to judge after the telephone number is input and before the user press the calling key, and when it is judged that the condition is met, the corresponding function option will be displayed on the dial interface for the user to select.

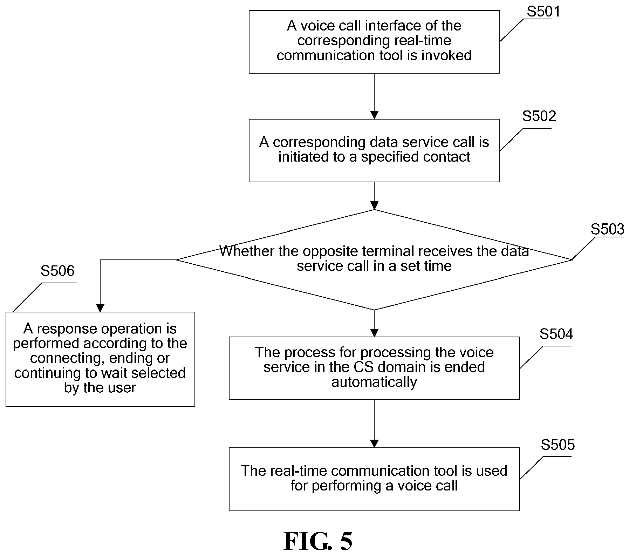

During calling, a corresponding switch menu option may be added, and after the user selects the menu opition, the system may perform the judgment according to a set condition, and after it is judged that the condition is met, it enters a switching process of the voice service; the switching process is specifically as shown in Fig. 5, which includes:
Step 501: A voice call interface of the corresponding real-time communication tool is invoked;
Step 502: A corresponding data service call is initiated to a specified contact (i.e., the opposite terminal);
Step 503: It is judged whether the opposite terminal receives the data service call in a set time; if yes, it turns to Step 504; otherwise, it turns to Step 506;
Step 504: The process for processing the voice service in the CS domain is ended automatically;
Step 505: The real-time communication tool is used for performing a voice call.
Step 506: A response operation is performed according to the connecting, ending or continuing to wait selected by the user.

In Step 506, if the opposite party does not accept the data service call, an interface prompt will be provided to the user, and the user may select to continue the data calling, answering the original CS domain voice calling or ending the original CS domain voice calling, and the system performs the corresponding operation according to the selection of the user, and if the user selects to continue calling, the above steps will be repeated.

When the communication terminal is a calling terminal, after the user selects the corresponding data service call before calling, the system directly initiates the corresponding data service call.

In the conversation process of the CS domain, when the user selects the switch menu and after it is judged that the condition is met, the switch control mode of the system is the same as above.

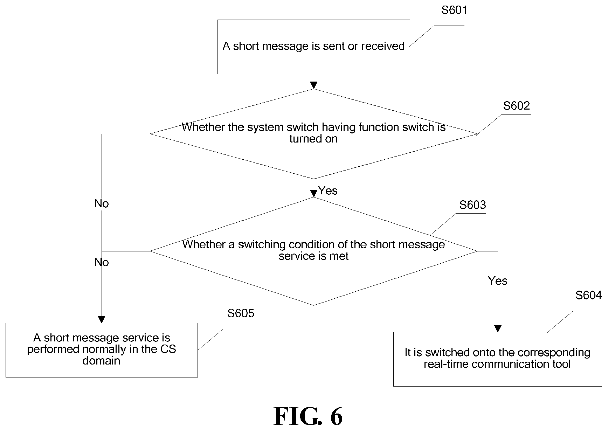

Referring to Fig. 6, it shows the case in which the communication terminal sends and receives a short message currently, i.e., the case in which the communication terminal is currently processing a short message service in the CS domain, and the process thereof includes:
Step 601: A short message is sent or received;
Step 602: It is judged whether the system switch having switching function is turned on; if yes, it turns to Step 603, otherwise, it turns to Step 605;
Step 603: It is judged whether a switching condition of the short message service is met; if yes, it turns to Step 604, otherwise, it turns to Step 605;
Step 604: It is switched onto the corresponding real-time communication tool.
Step 605: A normal short message service in the CS domain is performed.

However, for the short message sending party, it may start to judge after telephone number of the receiving party is input to the short message and before the user presses the sending key, and when it is judged that the condition is met, a corresponding message will be displayed on the interface for prompting the user, and the user will select whether to enable a real-time tool.

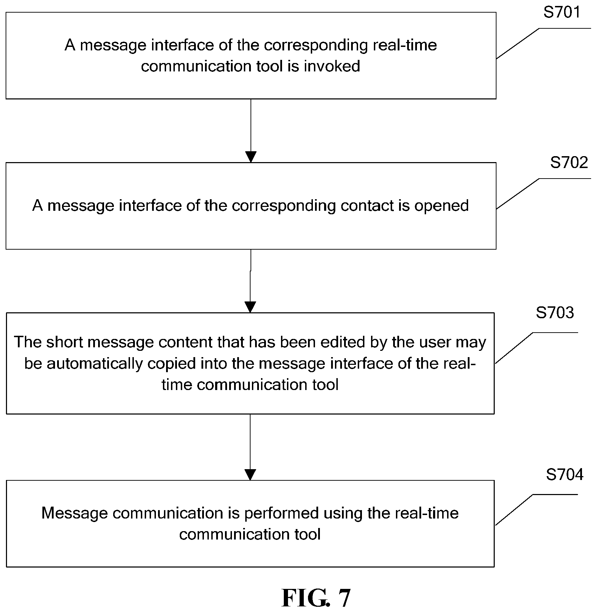

For the specific switching process in the above Step 604, reference may be made to Fig. 7, and it includes:
Step 701: A message interface of the corresponding real-time communication tool is invoked;
Step 702: A message interface of the corresponding contact (i.e., the opposite terminal) is opened;
Step 703: For the sending party, the short message content that has been edited by the user may be automatically copied into the message interface of the real-time tool;
Step 704: Message communication is performed using the real-time communication tool.

For the short message sending party, after the user selects to switch onto the real-time communication tool before sending the short message, the message interface of the corresponding contact in the real-time communication tool is opened directly, and the short message content edited by the user just now is automatically copied into the message box of the message to be sent in the real-time tool.

In the device for processing a communication service in a circuit switch domain according to the embodiment of the invention, the switching control module, the switching execution module and the setting module, as well as the voice call switching control submodule and the short message switching control submodule in the switching control module and the voice call switching submodule and the short message switching execution submodule in the switching execution module, etc., can all be realized by the processor in the communication terminal; and alternatively they may also be realized via specific logic circuits. In one specific embodiment, the processor may be a central processing unit (CPU), a microprocessing unit (MPU), a digital signal processor (DSP) or a field programmable gate array (FPGA), etc.

In the embodiments of the invention, if the above method for processing a communication service in a circuit switch domain is realized in the form of a software functional module and is sold and used as an independent product, it may also be stored in a computer-readable storage medium. Based on such an understanding, essential of above technical solutions or , in other words, parts of above technical solutions contributing to the related art may be embodied in form of software products which can be stored in a storage medium and include a number of instructions configured to make a computer device (which may be a personal computer, a server, a network device and the like) execute all or part of the steps of all the methods according to each embodiment of the application. The above storage medium includes various media on which a program code may be stored, for example, a U disk, a portable hard drive, a Read-Only Memory (ROM), a Random Access Memory (RAM), a magnetic disk or a compact disk , etc..

Correspondingly, one embodiment of the invention further provides a computer storage medium, on which a computer-executable instruction is stored, wherein the computer-executable instruction is configured for implementing the method for processing a communication service in a circuit switch domain according to each embodiment of the invention.

## Claims

1. A method for processing a communication service in a circuit switch domain, executed by a device (10) configured in a communication terminal, which comprises: a switching control module (11) and 1 switching execution module (12), comprising:
judging, by the switching control module (11), whether a switching condition is met, when a communication service being currently processed by the communication terminal is a voice call service or a short message service in a circuit switch domain, wherein the switching condition is a condition for switching the voice call service or the short message service onto a real-time communication tool in a packet switch domain; if the switching condition is met, notifying the switching execution module (12); and
switching, by the switching execution module (12), the voice call service or the short message service onto the real-time communication tool in the packet switch domain, when the switching condition is met; and **characterized in that**:
wherein when the communication service is a voice call service in the circuit switch domain, the switching condition is met if: the opposite terminal is in the address book of the real-time communication tool which has a voice call function and/or a video call function on the communication terminal; or the opposite terminal is in the address book of the real-time communication tool which has a voice call function and/or a video call function, and the communication terminal is in a networked state currently;
wherein the switching the voice call service in the circuit switch domain onto the real-time communication tool in the packet switch domain comprises:
initiating the voice call service and/or the video call service in real-time communication to the opposite terminal by the real-time communication tool which has the voice call function and/or the video call function on the communication terminal.

2. The method according to claim 1, wherein when the communication terminal is a calling terminal, it is judged whether the switching condition is met after the communication terminal determines the called terminal and before the communication terminal dials, during dialing or during conversation with the opposite terminal.

3. The method according to claim 1 or 2, wherein when the communication service is a short message service in the circuit switch domain, the switching condition is met if:
the opposite terminal is in an address book of the real-time communication tool which has a text message communication function on the communication terminal;
or,
the opposite terminal is in an address book of the real-time communication tool which has a text message communication function on the communication terminal, and the communication terminal is in a networked state currently;
or,
the communication terminal is in a networked state currently, and the opposite terminal is in an address book of a real-time communication tool which has a text message communication function on the communication terminal and the opposite terminal is in an on-line state currently.

4. The method according to claim 3, wherein when the communication terminal is a short message sending party, it is judged whether the switching condition is met after the communication terminal determines the short message receiving party and before a short message is sent, or after the communication terminal sends a short message;
when the communication terminal is a short message receiving party, it is judged whether the switching condition is met before the communication terminal opens the received short message, or after the communication terminal opens the received short message and before the communication terminal sends a reply short message to the opposite terminal.

5. The method according to claim 3, wherein the switching the short message service in the circuit switch domain onto the real-time communication tool in the packet switch domain comprises:
initiating the text message communication service in real-time communication to the opposite terminal by the real-time communication tool which has the text message communication function on the communication terminal;
or,
initiating the text message communication service in real-time communication to the opposite terminal by the real-time communication tool which has the text message communication function on the communication terminal, and copying the short message content to the message content of the real-time communication tool when the communication terminal has edited at least a part of the short message content.

6. A device (10) for processing a communication service in a circuit switch domain, configured in a communication terminal, comprising: a switching control module (11) and a switching execution module (12), wherein:
the switching control module (11) is configured for judging whether a switching condition is met, when a communication service being currently processed by a communication terminal is a voice call service or a short message service in a circuit switch domain, wherein the switching condition is a condition for switching the voice call service or the short message service onto a real-time communication tool in a packet switch domain; if it is met, notifying the switching execution module (12); and
the switching execution module (12) is configured for switching, after receiving the notification, the communication service onto the real-time communication tool in the packet switch domain of the communication terminal; and **characterized in that**:
wherein when the communication service is a voice call service in the circuit switch domain, the switching condition is met if: the opposite terminal is in the address book of the real-time communication tool which has a voice call function and/or a video call function on the communication terminal; or the opposite terminal is in the address book of the real-time communication tool which has a voice call function and/or a video call function on the communication terminal, and the communication terminal is in a networked state currently;
wherein the switching execution module (12) comprises: a voice call switching submodule, configured for initiating the voice call service and/or the video call service in real-time communication to the opposite terminal by the real-time communication tool which has the voice call function and/or the video call function on the communication terminal.

7. The device (10) according to claim 6, wherein the switching control module (11) further comprises: a voice call switching control submodule, configured for
judging, when the communication terminal is a calling terminal, whether the switching condition is met after the communication terminal determines the called terminal and before the communication terminal dials, during dialing or during conversation with the opposite terminal

8. The device (10) according to claim 6 or 7, wherein when the communication service is a short message service in the circuit switch domain, the switching condition is met if:
the opposite terminal is in an address book of the real-time communication tool which has a text message communication function on the communication terminal;
or,
the opposite terminal is in an address book of the real-time communication tool which has a text message communication function on the communication terminal, and the communication terminal is in a networked state currently;
or,
the communication terminal is in a networked state currently, and the opposite terminal is in an address book of the real-time communication tool which has a text message communication function on the communication terminal and the opposite terminal is in an on-line state currently.

9. The device (10) according to claim 8, wherein the switching control module (11) comprises: a short message switching control submodule, configured for
judging, when the communication terminal is a short message sending party, whether the switching condition is met after the communication terminal determines the short message receiving party and before a short message is sent, or after the communication terminal sends a short message; and
judging, when the communication terminal is a short message receiving party, whether the switching condition is met before the communication terminal opens the received short message, or after the communication terminal opens the received short message and before the communication terminal sends a reply short message to the opposite terminal.

10. The device (10) according to claim 9, wherein the switching execution module (12) comprises: a short message switching execution submodule, configured for
initiating the text message communication service in real-time communication to the opposite terminal by the real-time communication tool which has the text message communication function on the communication terminal;
or,
initiating the text message real-time communication service in real-time communication to the opposite terminal by the real-time communication tool which has the text message communication function on the communication terminal, and copying the short message content to the message content of the real-time communication tool when the communication terminal has edited at least a part of the short message content.

11. A non-transitory computer-readable storage medium storing a computer-executable instruction, which is configured for implementing the method for processing a communication service in a circuit switch domain according to any one of claims 1 to 5.

## Patentansprüche

1. Verfahren zum Verarbeiten eines Kommunikationsdienstes in einer Leitungsvermittlungsdomäne, das von einer Vorrichtung (10) ausgeführt wird, die in einem Kommunikationsendgerät konfiguriert ist, das Folgendes umfasst: ein Vermittlungssteuermodul (11) und 1 Vermittlungsausführungsmodul (12), das Folgendes umfasst:
Beurteilen durch das Vermittlungssteuermodul (11), ob eine Vermittlungsbedingung erfüllt ist, wenn es sich bei einem Kommunikationsdienst, der momentan von dem Kommunikationsendgerät verarbeitet wird, um einen Sprachanrufdienst oder einen Kurznachrichtendienst in einer Leitungsvermittlungsdomäne handelt, wobei es sich bei der Vermittlungsbedingung um eine Bedingung zum Vermitteln des Sprachanrufdienstes oder des Kurznachrichtendienstes auf ein Echtzeitkommunikationswerkzeug in einer Paketvermittlungsdomäne handelt;
falls die Vermittlungsbedingung erfüllt ist, Benachrichtigen des Vermittlungsausführungsmoduls (12); und Vermitteln, durch das Vermittlungsausführungsmodul (12), des Sprachanrufdienstes oder des Kurznachrichtendienstes auf das Echtzeitkommunikationswerkzeug in der Paketvermittlungsdomäne, wenn die Vermittlungsbedingung erfüllt ist; und
**dadurch gekennzeichnet, dass**:
wobei, wenn es sich bei dem Kommunikationsdienst um einen Sprachanrufdienst in der Leitungsvermittlungsdomäne handelt, die Vermittlungsbedingung erfüllt ist, falls: das Gegenstellen-Endgerät sich in dem Adressbuch des Echtzeitkommunikationswerkzeugs befindet, das eine Sprachanruffunktion und/oder eine Videoanruffunktion auf dem Kommunikationsendgerät aufweist; oder das Gegenstellen-Endgerät sich in dem Adressbuch des Echtzeitkommunikationswerkzeugs befindet, das eine Sprachanruffunktion und/oder eine Videoanruffunktion aufweist, und das Kommunikationsendgerät sich momentan in einem vernetzten Zustand befindet;
wobei das Vermitteln des Sprachanrufdienstes in der Leitungsvermittlungsdomäne auf das Echtzeitkommunikationswerkzeug in der Paketvermittlungsdomäne Folgendes umfasst:
Initiieren des Sprachanrufdienstes und/oder des Videoanrufdienstes in einer Echtzeitkommunikation an das Gegenstellen-Endgerät durch das Echtzeitkommunikationswerkzeug, das eine Sprachanruffunktion und/oder eine Videoanruffunktion auf dem Kommunikationsendgerät aufweist.

2. Verfahren nach Anspruch 1, wobei, wenn es sich bei dem Kommunikationsendgerät um ein anrufendes Endgerät handelt, beurteilt wird, ob die Vermittlungsbedingung erfüllt ist, nachdem das Kommunikationsendgerät das angerufene Endgerät bestimmt hat und bevor das Kommunikationsendgerät wählt, während eines Wählens oder während einer Unterhaltung mit dem Gegenstellen-Endgerät.

3. Verfahren nach Anspruch 1 oder 2, wobei, wenn es sich bei dem Kommunikationsdienst um einen Kurznachrichtendienst in der Leitungsvermittlungsdomäne handelt, die Vermittlungsbedingung erfüllt ist, falls:
das Gegenstellen-Endgerät sich in einem Adressbuch des Echtzeitkommunikationswerkzeugs befindet, das eine Textnachrichtenkommunikationsfunktion auf dem Kommunikationsendgerät aufweist;
oder,
das Gegenstellen-Endgerät sich in einem Adressbuch des Echtzeitkommunikationswerkzeugs befindet, das eine Textnachrichtenkommunikationsfunktion auf dem Kommunikationsendgerät aufweist, und das Kommunikationsendgerät sich momentan in einem vernetzten Zustand befindet;
oder,
das Kommunikationsendgerät sich momentan in einem vernetzten Zustand befindet und das Gegenstellen-Endgerät sich in einem Adressbuch des Echtzeitkommunikationswerkzeugs befindet, das eine Textnachrichtenkommunikationsfunktion auf dem Kommunikationsendgerät aufweist, und das Gegenstellen-Endgerät sich momentan in einem Online-Zustand befindet.

4. Verfahren nach Anspruch 3, wobei, wenn es sich bei dem Kommunikationsendgerät um eine Partei handelt, die eine Kurznachricht sendet, beurteilt wird, ob die Vermittlungsbedingung erfüllt ist, nachdem das Kommunikationsendgerät die Partei bestimmt hat, die die Kurznachricht empfängt, und bevor eine Kurznachricht gesendet wird, oder nachdem das Kommunikationsendgerät die Kurznachricht gesendet hat;
wenn es sich bei dem Kommunikationsendgerät um eine Partei handelt, die eine Kurznachricht empfängt, beurteilt wird, ob die Vermittlungsbedingung erfüllt ist, bevor das Kommunikationsendgerät die empfangene Kurznachricht öffnet oder nachdem das Kommunikationsendgerät die empfangene Kurznachricht geöffnet hat und bevor das Kommunikationsendgerät eine Antwortkurznachricht an das Gegenstellen-Endgerät sendet.

5. Verfahren nach Anspruch 3, wobei das Vermitteln des Kurznachrichtendienstes in der Leitungsvermittlungsdomäne auf das Echtzeitkommunikationswerkzeug in der Paketvermittlungsdomäne Folgendes umfasst:
Initiieren des Textnachrichtenkommunikationsdienstes in einer Echtzeitkommunikation an das Gegenstellen-Endgerät durch das Echtzeitkommunikationswerkzeug, das die Textnachrichtenkommunikationsfunktion auf dem Kommunikationsendgerät aufweist;
oder,
Initiieren des Textnachrichtenkommunikationsdienstes in einer Echtzeitkommunikation an das Gegenstellen-Endgerät durch das Echtzeitkommunikationswerkzeug, das die Textnachrichtenkommunikationsfunktion auf dem Kommunikationsendgerät aufweist, und Kopieren des Kurznachrichteninhalts in den Nachrichteninhalt des Echtzeitkommunikationswerkzeugs, wenn das Kommunikationsendgerät mindestens einen Teil des Kurznachrichteninhalts editiert hat.

6. Vorrichtung (10) zum Verarbeiten eines Kommunikationsdienstes in einer Leitungsvermittlungsdomäne, die in einem Kommunikationsendgerät konfiguriert ist, das Folgendes umfasst: ein Vermittlungssteuermodul (11) und ein Vermittlungsausführungsmodul (12), wobei:
das Vermittlungssteuermodul (11) zum Beurteilen, ob eine Vermittlungsbedingung erfüllt ist, konfiguriert ist, wenn es sich bei einem Kommunikationsdienst, der momentan durch ein Kommunikationsendgerät verarbeitet wird, um einen Sprachanrufdienst oder einen Kurznachrichtendienst in einer Leitungsvermittlungsdomäne handelt, wobei es sich bei der Vermittlungsbedingung um eine Bedingung zum Vermitteln des Sprachanrufdienstes oder des Kurznachrichtendienstes auf ein Echtzeitkommunikationswerkzeug in einer Paketvermittlungsdomäne handelt; falls sie erfüllt ist, Benachrichtigen des Vermittlungsausführungsmoduls (12); und
das Vermittlungsausführungsmodul (12) dazu konfiguriert ist, nach dem Empfangen der Benachrichtigung den Kommunikationsdienst auf das Echtzeitkommunikationswerkzeug in der Paketvermittlungsdomäne des Kommunikationsendgeräts zu vermitteln; **dadurch gekennzeichnet, dass**:
wobei, wenn es sich bei dem Kommunikationsdienst um einen Sprachanrufdienst in der Leitungsvermittlungsdomäne handelt, die Vermittlungsbedingung erfüllt ist, falls: das Gegenstellen-Endgerät sich in dem Adressbuch des Echtzeitkommunikationswerkzeugs befindet, das eine Sprachanruffunktion und/oder eine Videoanruffunktion auf dem Kommunikationsendgerät aufweist; oder das Gegenstellen-Endgerät sich in dem Adressbuch des Echtzeitkommunikationswerkzeugs befindet, das eine Sprachanruffunktion und/oder eine Videoanruffunktion auf dem Kommunikationsendgerät aufweist, und das Kommunikationsendgerät sich momentan in einem vernetzten Zustand befindet;
wobei das Vermittlungsausführungsmodul (12) Folgendes umfasst: ein Sprachanrufvermittlungsteilmodul, das zum Initiieren des Sprachanrufdienstes und/oder des Videoanrufdienstes in einer Echtzeitkommunikation an das Gegenstellen-Endgerät durch das Echtzeitkommunikationswerkzeug, das die Sprachanruffunktion und/oder die Videoanruffunktion auf dem Kommunikationsendgerät aufweist, konfiguriert ist.

7. Vorrichtung (10) nach Anspruch 6, wobei das Vermittlungssteuermodul (11) ferner Folgendes umfasst: ein Sprachanrufvermittlungssteuerteilmodul, das konfiguriert ist zum
Beurteilen, wenn es sich bei dem Kommunikationsendgerät um ein anrufendes Endgerät handelt, ob die Vermittlungsbedingung erfüllt ist, nachdem das Kommunikationsendgerät das angerufene Endgerät bestimmt hat und bevor das Kommunikationsendgerät wählt, während eines Wählens oder während einer Unterhaltung mit dem Gegenstellen-Endgerät.

8. Vorrichtung (10) nach Anspruch 6 oder 7, wobei, wenn es sich bei dem Kommunikationsdienst um einen Kurznachrichtendienst in einer Leitungsvermittlungsdomäne handelt, die Vermittlungsbedingung erfüllt ist, falls:
das Gegenstellen-Endgerät sich in einem Adressbuch des Echtzeitkommunikationswerkzeugs befindet, das eine Textnachrichtenkommunikationsfunktion auf dem Kommunikationsendgerät aufweist;
oder,
das Gegenstellen-Endgerät sich in einem Adressbuch des Echtzeitkommunikationswerkzeugs befindet, das eine Textnachrichtenkommunikationsfunktion auf dem Kommunikationsendgerät aufweist, und das Kommunikationsendgerät sich momentan in einem vernetzten Zustand befindet;
oder,
das Kommunikationsendgerät sich momentan in einem vernetzten Zustand befindet und das Gegenstellen-Endgerät sich in einem Adressbuch des Echtzeitkommunikationswerkzeugs befindet, das eine Textnachrichtenkommunikationsfunktion auf dem Kommunikationsendgerät aufweist, und das Gegenstellen-Endgerät sich momentan in einem Online-Zustand befindet.

9. Vorrichtung (10) nach Anspruch 8, wobei das Vermittlungssteuermodul (11) Folgendes umfasst: ein Kurznachrichtenvermittlungssteuerteilmodul, das konfiguriert ist zum
Beurteilen, wenn es sich bei dem Kommunikationsendgerät um eine Partei handelt, die eine Kurznachricht sendet, ob die Vermittlungsbedingung erfüllt ist, nachdem das Kommunikationsendgerät die Partei bestimmt hat, die die Kurznachricht empfängt, und bevor eine Kurznachricht gesendet wird oder nachdem das Kommunikationsendgerät eine Kurznachricht gesendet hat; und
Beurteilen, wenn es sich bei dem Kommunikationsendgerät um eine Partei handelt, die eine Kurznachricht empfängt, ob die Vermittlungsbedingung erfüllt ist, bevor das Kommunikationsendgerät die empfangene Kurznachricht öffnet oder nachdem das Kommunikationsendgerät die empfangene Kurznachricht geöffnet hat und bevor das Kommunikationsendgerät eine Antwortkurznachricht an das Gegenstellen-Endgerät sendet.

10. Vorrichtung (10) nach Anspruch 9, wobei das Vermittlungsausführungsmodul (12) Folgendes umfasst: ein Kurznachrichtenvermittlungsausführungsteilmodul, das konfiguriert ist zum
Initiieren des Textnachrichtenkommunikationsdienstes in einer Echtzeitkommunikation an das Gegenstellen-Endgerät durch das Echtzeitkommunikationswerkzeug, das die Textnachrichtenkommunikationsfunktion auf dem Kommunikationsendgerät aufweist;
oder,
Initiieren des Textnachrichtenechtzeitkommunikationsdienstes in einer Echtzeitkommunikation an das Gegenstellen-Endgerät durch das Echtzeitkommunikationswerkzeug, das die Textnachrichtenkommunikationsfunktion auf dem Kommunikationsendgerät aufweist, und Kopieren des Kurznachrichteninhalts in den Nachrichteninhalt des Echtzeitkommunikationswerkzeugs, wenn das Kommunikationsendgerät mindestens einen Teil des Kurznachrichteninhalts editiert hat.

11. Nichtflüchtiges computerlesbares Speichermedium, das eine computerausführbare Anweisung speichert, die zum Umsetzen des Verfahrens zum Verarbeiten eines Kommunikationsdienstes in einer Leitungsvermittlungsdomäne nach einem der Ansprüche 1 bis 5 konfiguriert ist.

## Revendications

1. Procédé de traitement d'un service de communication dans un domaine à commutation de circuits, exécuté par un dispositif (10) configuré dans un terminal de communication, qui comprend : un module de commande de commutation (11) et 1 module d'exécution de commutation (12), comprenant :
le fait de déterminer, par le module de commande de commutation (11), si une condition de commutation est remplie, lorsqu'un service de communication en cours de traitement par le terminal de communication est un service d'appel vocal ou un service de messages courts dans un domaine à commutation de circuits, dans lequel la condition de commutation est une condition de commutation du service d'appel vocal ou du service de messages courts en outil de communication en temps réel dans un domaine à commutation par paquets ;
si la condition de commutation est remplie, la notification du module d'exécution de commutation (12) ; et
la commutation par le module d'exécution de commutation (12), du service d'appel vocal ou du service de messages courts en outil de communication en temps réel dans le domaine à commutation par paquets, lorsque la condition de commutation est remplie ; et
**caractérisé en ce que** :
dans lequel, lorsque le service de communication est un service d'appel vocal dans le domaine à commutation de circuits, la condition de commutation est remplie si : le terminal opposé se trouve dans le carnet d'adresses de l'outil de communication en temps réel qui a une fonction d'appel vocal et/ou une fonction d'appel vidéo sur le terminal de communication ; ou le terminal opposé se trouve dans le carnet d'adresses de l'outil de communication en temps réel qui a une fonction d'appel vocal et/ou une fonction d'appel vidéo, et le terminal de communication est actuellement dans un état en réseau ;
dans lequel la commutation du service d'appel vocal dans le domaine à commutation de circuits en outil de communication en temps réel dans le domaine à commutation par paquets comprend : l'initiation du service d'appel vocal et/ou du service d'appel vidéo en communication en temps réel avec le terminal opposé par l'outil de communication en temps réel qui a la fonction d'appel vocal et/ou la fonction d'appel vidéo sur le terminal de communication.

2. Procédé selon la revendication 1, dans lequel, lorsque le terminal de communication est un terminal appelant, il est déterminé si la condition de commutation est remplie après que le terminal de communication a déterminé le terminal appelé et avant que le terminal de communication ne compose, pendant la numérotation ou pendant la conversation avec le terminal opposé.

3. Procédé selon la revendication 1 ou 2, dans lequel, lorsque le service de communication est un service de messages courts dans le domaine à commutation de circuits, la condition de commutation est remplie si :
le terminal opposé se trouve dans un carnet d'adresses de l'outil de communication en temps réel qui a une fonction de communication par message texte sur le terminal de communication ;
ou,
le terminal opposé se trouve dans un carnet d'adresses de l'outil de communication en temps réel qui a une fonction de communication par message texte sur le terminal de communication, et le terminal de communication est actuellement dans un état en réseau ;
ou,
le terminal de communication est actuellement dans un état en réseau, et le terminal opposé se trouve dans un carnet d'adresses d'un outil de communication en temps réel qui a une fonction de communication par message texte sur le terminal de communication, et le terminal opposé est actuellement dans un état en ligne.

4. Procédé selon la revendication 3, dans lequel, lorsque le terminal de communication est un émetteur de messages courts, il est déterminé si la condition de commutation est remplie après que le terminal de communication a déterminé le destinataire des messages courts et avant l'envoi d'un message court, ou après que le terminal de communication a envoyé un message court ;
lorsque le terminal de communication est un destinataire de messages courts, il est déterminé si la condition de commutation est remplie avant que le terminal de communication n'ouvre le message court reçu, ou après que le terminal de communication a ouvert le message court reçu et avant que le terminal de communication n'envoie un message court de réponse au terminal opposé.

5. Procédé selon la revendication 3, dans lequel la commutation du service de messages courts dans le domaine à commutation de circuits en outil de communication en temps réel dans le domaine à commutation par paquets comprend :
l'initiation du service de communication par messages textes en communication en temps réel avec le terminal opposé par l'outil de communication en temps réel qui a la fonction de communication par messages textes sur le terminal de communication ;
ou,
l'initiation du service de communication par messages textes en communication en temps réel avec le terminal opposé par l'outil de communication en temps réel qui a la fonction de communication par messages textes sur le terminal de communication, et la copie du contenu du message court dans le contenu du message de l'outil de communication en temps réel lorsque le terminal de communication a édité au moins une partie du contenu du message court.

6. Dispositif (10) pour traiter un service de communication dans un domaine à commutation de circuits, configuré dans un terminal de communication, comprenant : un module de commande de commutation (11) et un module d'exécution de commutation (12), dans lequel :
le module de commande de commutation (11) est configuré pour déterminer si une condition de commutation est remplie, lorsqu'un service de communication en cours de traitement par un terminal de communication est un service d'appel vocal ou un service de messages courts dans un domaine à commutation de circuits, dans lequel la condition de commutation est une condition de commutation du service d'appel vocal ou du service de messages courts en outil de communication en temps réel dans un domaine à commutation par paquets ; si elle est remplie, la notification du module d'exécution de commutation (12) ; et
le module d'exécution de commutation (12) est configuré pour commuter, après réception de la notification, le service de communication en outil de communication en temps réel dans le domaine à commutation par paquets du terminal de communication ;
et **caractérisé en ce que** :
dans lequel, lorsque le service de communication est un service d'appel vocal dans le domaine à commutation de circuits, la condition de commutation est remplie si : le terminal opposé se trouve dans le carnet d'adresses de l'outil de communication en temps réel qui a une fonction d'appel vocal et/ou une fonction d'appel vidéo sur le terminal de communication ; ou le terminal opposé se trouve dans le carnet d'adresses de l'outil de communication en temps réel qui a une fonction d'appel vocal et/ou une fonction d'appel vidéo, et le terminal de communication est actuellement dans un état en réseau ;
dans lequel le module d'exécution de commutation (12) comprend : un sous-module de commutation d'appel vocal configuré pour initier le service d'appel vocal et/ou le service d'appel vidéo en communication en temps réel avec le terminal opposé par l'outil de communication en temps réel qui a la fonction d'appel vocal et/ou la fonction d'appel vidéo sur le terminal de communication.

7. Dispositif (10) selon la revendication 6, dans lequel le module de commande de commutation (11) comprend en outre : un sous-module de commande de commutation d'appel vocal, configuré pour
déterminer, lorsque le terminal de communication est un terminal appelant, si la condition de commutation est remplie après que le terminal de communication a déterminé le terminal appelé et avant que le terminal de communication ne compose, pendant la numérotation ou pendant la conversation avec le terminal opposé.

8. Dispositif (10) selon la revendication 6 ou 7, dans lequel, lorsque le service de communication est un service de messages courts dans le domaine à commutation de circuits, la condition de commutation est remplie si :
le terminal opposé se trouve dans un carnet d'adresses de l'outil de communication en temps réel qui a une fonction de communication par message texte sur le terminal de communication ;
ou,
le terminal opposé se trouve dans un carnet d'adresses de l'outil de communication en temps réel qui a une fonction de communication par message texte sur le terminal de communication, et le terminal de communication est actuellement dans un état en réseau ;
ou,
le terminal de communication est actuellement dans un état en réseau, et le terminal opposé se trouve dans un carnet d'adresses de l'outil de communication en temps réel qui a une fonction de communication par message texte sur le terminal de communication, et le terminal opposé est actuellement dans un état en ligne.

9. Dispositif (10) selon la revendication 8, dans lequel le module de commande de commutation (11) comprend : un sous-module de commande de commutation de messages courts, configuré pour déterminer, lorsque le terminal de communication est un émetteur de messages courts, si la condition de commutation est remplie après que le terminal de communication a déterminé le destinataire des messages courts et avant l'envoi d'un message court, ou après que le terminal de communication a envoyé un message court ; et
déterminer, lorsque le terminal de communication est un destinataire de messages courts, si la condition de commutation est remplie avant que le terminal de communication n'ouvre le message court reçu, ou après que le terminal de communication a ouvert le message court reçu et avant que le terminal de communication n'envoie un message court de réponse au terminal opposé.

10. Dispositif (10) selon la revendication 9, dans lequel le module d'exécution de commutation (12) comprend : un sous-module d'exécution de commutation de messages courts, configuré pour initier le service de communication par messages textes en communication en temps réel avec le terminal opposé par l'outil de communication en temps réel qui a la fonction de communication par messages textes sur le terminal de communication ;
ou,
initier le service de communication en temps réel par messages textes en communication en temps réel avec le terminal opposé par l'outil de communication en temps réel qui a la fonction de communication par messages textes sur le terminal de communication, et copier le contenu du message court dans le contenu du message de l'outil de communication en temps réel lorsque le terminal de communication a édité au moins une partie du contenu du message court.

11. Support de stockage non transitoire lisible par ordinateur stockant une instruction exécutable par ordinateur, qui est configuré pour mettre en œuvre le procédé de traitement d'un service de communication dans un domaine à commutation de circuits selon l'une quelconque des revendications 1 à 5.
